(19) Europäisches Patentamt

European Patent Office

Office européen des brevets

(11) **EP 1 174 401 B1**

(12) **EUROPEAN PATENT SPECIFICATION**

(45) Date of publication and mention
of the grant of the patent:
**14.01.2004 Bulletin 2004/03**

(51) Int Cl.⁷: **C04B 41/48**

(21) Application number: **01305393.9**

(22) Date of filing: **21.06.2001**

(54) **An emulsion polymer and a method for providing a gloss coated cementitious substrate**

Polymer-Latex und Verfahren zur Erzeugung eines glänzenden Überzugs auf Beton

Polymères en émulsion et procédé de préparation d'un revêtement brillant sur des substats à base de ciment

(84) Designated Contracting States:
**BE DE FR GB IT NL**

(30) Priority: **05.07.2000 US 215956 P**

(43) Date of publication of application:
**23.01.2002 Bulletin 2002/04**

(73) Proprietor: **ROHM AND HAAS COMPANY**
**Philadelphia, Pennsylvania 19106-2399 (US)**

(72) Inventors:
• **Tysak, Theodore**
**Ambler, Pennsylvania 19002 (US)**
• **Frazza, Mark Stephen**
**Philadelphia, Pennsylvania 19103 (US)**
• **Procopio, Leo Joseph**
**Lansdale, Pennsylvania 19446 (US)**

(74) Representative: **Kent, Venetia Katherine**
**Rohm and Haas (UK) Ltd**
**European Operations Patent Dept.**
**Lennig House**
**2 Mason's Avenue**
**Croydon, CR9 3NB (GB)**

(56) References cited:
**EP-A- 0 251 166        EP-A- 0 421 787**
**DE-A- 3 827 975        US-A- 5 376 503**

**Description**

The present invention relates to a method for providing a coating onto cementitious substrate. In particular, the method of this invention includes applying a coating formulation containing an emulsion polymer onto an uncured cementitious substrate to provide a gloss coated cementitious substrate.

Concrete roof tiles are susceptible to efflorescence, the formation of white mineral deposits on the surface of the concrete roof tile. These white mineral deposits are unevenly distributed on the surface and produce an unsightly mottle appearance. Efflorescence also detracts from the appearance of the concrete roof tile by diminishing the color intensity of a colored concrete roof tile. Efflorescence may occur during the step of curing the concrete roof tile or as a result of weathering.

Polymeric coatings are known to protect the concrete roof tile from the effects of weathering, thus minimizing efflorescence. Further, polymeric coatings also provide the concrete roof tile with a glossy appearance. DE 19810050 A1 discloses an aqueous film-forming composition useful for coating mineral molded bodies. The aqueous film-forming composition contains at least one copolymer which includes as polymerized units 70 to 99.9 weight % of at least one ester of methacrylic acid with a $C_1$-$C_{10}$ alkanol, 0.1 to 30 weight % of at least one different ethylenically unsaturated monomer, and at most 1 weight % of monomers with two or more ethylenically unsaturated bonds, wherein at least 50 weight % of the at least one ester of methacrylic acid with a $C_1$-$C_{10}$ alkanol is different from methyl methacrylate. DE 19810050 A1 discloses that the aqueous film-forming compositions provide coatings with long-term gloss stability. However, quantitative measurements for the gloss levels of these coatings were not disclosed.

Coatings for cementitious substrates with high levels of gloss are desired. The inventors have discovered a critical molecular weight range for emulsion polymers which provide high gloss coatings for cementitious substrates. Preferably, these coatings for cementitious substrates have a combination of high gloss appearance, efflorescence resistance, and dirt pick-up resistance. Further, the inventors have discovered a method of providing concrete roof tiles with high gloss, good primary and secondary efflorescence resistance, and dirt pick-up resistance. The method involves the use of emulsion polymers with molecular weights within a specified range and is suitable for the application onto green cementitious substrates.

The first aspect of this invention provides a method for providing a gloss coated cementitious substrate including the steps of preparing a coating formulation containing an emulsion polymer which includes as polymerized units 75 to 99.5 weight % at least one nonionic monomer based on the weight of the emulsion polymer, 0.5 to 5 weight % at least one ionic monomer based on the weight of the emulsion polymer, 0 to 10 weight % at least functional monomer based on the weight of the emulsion polymer, and 0 to 10 weight % at least one photoinitiator monomer based on the weight of the emulsion polymer; wherein the sum of the nonionic monomer, the ionic monomer, the functional monomer, and the photoinitiator monomer equals 100%; wherein the emulsion polymer has a weight average molecular weight in the range of 30,000 to 300,000; wherein the emulsion polymer has a glass transition temperature in the range of -10°C to 60°C; applying the coating formulation onto a green cementitious substrate to form a coated green cementitious substrate; and curing or allowing to cure the coated green cementitious substrate to form the gloss coated cementitious substrate.

In the second aspect of this invention, an emulsion polymer is provided including as polymerized units from 75 to 99 weight % at least one nonionic monomer based on the weight of the emulsion polymer, 0.5 to 5 weight % at least one ionic monomer based on the weight of the emulsion polymer, 0 to 10 weight % at least functional monomer based on the weight of the emulsion polymer, and 0.5 to 10 weight % at least one photoinitiator monomer based on the weight of the emulsion polymer; wherein the sum of the nonionic monomer, the ionic monomer, the functional monomer, and the photoinitiator monomer equals 100%; wherein the emulsion polymer has a weight average molecular weight in the range of 30,000 to 300,000; and wherein the emulsion polymer has a glass transition temperature in the range of -10°C to 60°C.

The third aspect of this invention provides a coating formulation containing an emulsion polymer including as polymerized units from 75 to 99.5 weight % at least one nonionic monomer based on the weight of the emulsion polymer, 0.5 to 5 weight % at least one ionic monomer based on the weight of the emulsion polymer, 0 to 10 weight % at least functional monomer based on the weight of the emulsion polymer, and 0 to 10 weight % at least one photoinitiator monomer based on the weight of the emulsion polymer; wherein the sum of the nonionic monomer, the ionic monomer, the functional monomer, and the photoinitiator monomer equals 100%; wherein the emulsion polymer has a weight average molecular weight in the range of 30,000 to 300,000; wherein the emulsion polymer has a glass transition temperature in the range of -10°C to 60°C; and 0.5 weight % to 10 weight % photoinitiator molecule, based on the weight of the emulsion polymer.

The fourth aspect of this invention provides an article having a glossy coated cementitious substrate including a cured cementitious substrate; and a coating formed from a coating formulation comprising as polymerized units from 75 to 99.5 weight % at least one nonionic monomer based on the weight of the emulsion polymer, 0.5 to 5 weight % at least one ionic monomer based on the weight of the emulsion polymer, 0 to 10 weight % at least functional monomer based on the weight of the emulsion polymer, and 0 to 10 weight % at least one photoinitiator monomer based on the weight of the emulsion polymer; wherein the sum of the nonionic monomer, the ionic monomer, the functional monomer, and the photoinitiator monomer equals 100%; wherein the emulsion polymer has a weight average molecular weight in the range of 30,000 to 300,000; wherein the emulsion polymer has a glass transition temperature in the range of -10°C to 60°C, and wherein the coating formulation is applied onto the cementitious substrate prior to cure of the cementitious substrate.

As used herein, the term "(meth)acrylate" refers to either acrylate or methacrylate, the term "(meth)acrylic" refers to either acrylic or methacrylic, and the term "(meth)acrylamide" refers to either acrylamide or methacrylamide.

"Glass transition temperature" or "$T_g$" as used herein, means the temperature at or above which a glassy polymer will undergo segmental motion of the polymer chain. Glass transition temperatures of a polymer can be estimated by the Fox equation [Bulletin of the American Physical Society 1, 3, page 123 (1956)] as follows:

$$\frac{l}{T_g} = \frac{w_1}{T_{g(1)}} + \frac{w_2}{T_{g(2)}}$$

For a copolymer, $w_1$ and $w_2$ refer to the weight fraction of the two comonomers, and $T_{g(1)}$ and $T_{g(2)}$ refer to the glass transition temperatures of the two corresponding homopolymers in degrees Kelvin. For polymers containing three or more monomers, additional terms are added ($w_n/T_{g(n)}$). The $T_g$ of a polymer can also be measured by various techniques including, for examples, differential scanning calorimetry ("DSC"). The particular values of $T_g$ reported herein are calculated based on the Fox equation.

"Dirt pick-up resistance" as used herein, refers to the ability of a coated surface to resist the deposit of foreign matter consisting of dirt, soot, or stain onto a coated substrate. The deposit of foreign matter onto a coated substrate is aesthetically undesirable, and the deposited material may be difficult to remove from the coated substrate. Generally, increasing the hardness or increasing the crosslinking of a coating, increases the resistance to dirt pick-up.

"Cementitious substrate" as used herein, refers to an article prepared from a cement mix or having a surface coated with cement mix. A cement mix is a mixture including cement, sand, and water. Polymer may optionally be included in the mixture. "Green cementitious substrate" as used herein, refers to an article prepared from a cement mix or containing a surface coated with cement mix wherein the cement mix is not cured.

"Actinic radiation" as used herein, refers to radiation in the ultraviolet and visible regions including wavelengths in the range of 300 nm to 700 nm.

The method of the present invention includes the preparation of a coating formulation which contains an emulsion polymer prepared from ethylenically unsaturated monomers. The emulsion polymer contains as polymerized units, from 75 to 99.5 weight % at least one nonionic monomer, from 0.5 to 5 weight % at least one ionic monomer, from 0 to 10 weight % at least one functional monomer, and from 0 to 10 weight % at least one photoinitiator monomer, based on the weight of the emulsion polymer. As used herein, the weight of the emulsion polymer refers to the dry weight of the emulsion polymer.

The nonionic monomer is an ethylenically unsaturated monomer including styrene; $\alpha$-methyl styrene; substituted styrenes; alkyl (meth)acrylates such as methyl(meth)acrylate, ethyl (meth)acrylate, butyl (meth)acrylate, 2-ethyl hexyl (meth)acrylate, and isobornyl (meth)acrylate; vinyl acetate; 2-hydroxyethyl(meth)acrylate; glycidal (meth)acrylate; vinyl chloride; (meth)acrylonitrile; dimethylaminoethyl(meth)acrylate; vinylidene dichloride, butadiene; and ethylene. The emulsion polymer may contain as polymerized units from 75 to 99.5 weight % nonionic monomer, preferably from 80 to 99 weight % nonionic monomer, and more preferably from 85 to 99 weight % nonionic monomer.

The ionic monomer is an ethylenically unsaturated monomer which contains an acid or amide group. Although not wanting to be limited to a single theory, it is believed that the ionic monomer provides stability to the emulsion polymer during synthesis and during the preparation of the coating formulation. The acid or amine group of the ionic monomer also provides stabilization to the emulsion polymer in the coating formulation upon contact with the green cementitious substrate. Suitable ionic monomers include carboxylic acid monomers such as (meth)acrylic acid, itaconic acid, fumaric acid, crotonic acid, maleic acid, monomethyl itaconate, monomethyl fumarate, and monobutyl fumarate; carboxylic anhydride monomers such as maleic anhydride and itaconic anhydride; strong acid monomers such as phosphoethyl methacrylate, 2-acrylamido-2-methyl-1-propanesulfonic acid, and sodium vinyl sulfonate; and amide containing monomers such as (meth)acrylamide and substituted (meth)acrylamides. Acrylic acid and methacrylic acid are preferred. The emulsion polymer may contain as polymerized units from 0.5 to 5 weight % ionic monomer, preferably from 1 to 3 weight % ionic monomer, and more preferably from 1 to 2 weight % ionic monomer.

The emulsion polymer used in this invention may also contain 0"to 10 weight % at least one functional monomer as polymerized units, based on the weight of the emulsion polymer. Suitable functional monomers include silicone containing ethylenically unsaturated monomers, such as vinyl trimethoxy silane and methacryloxy propyl trimethoxy silane; and cross-linking monomers. Suitable crosslinking monomers include acetoacetate-functional monomers such as acetoacetoxyethyl acrylate, acetoacetoxypropyl methacrylate, acetoacetoxyethyl methacrylate, allyl acetoacetate, acetoacetoxybutyl methacrylate, and 2,3-di(acetoacetoxy)propyl methacrylate; divinyl benzene, (meth)acryloyl polyesters of polyhydroxylated compounds, divinyl esters of polycarboxylic acids, diallyl esters of polycarboxylic acids, diallyl dimethyl ammonium chloride, triallyl terephthalate, methylene bis acrylamide, diallyl maleate, diallyl fumarate, hexamethylene bis maleamide, triallyl phosphate, trivinyl trimellitate, divinyl adipate, glyceryl trimethacrylate, diallyl succinate, divinyl ether, the divinyl ethers of ethylene glycol or diethylene glycol diacrylate, polyethylene glycol diacrylates of methacrylates, 1,6-hexanediol diacrylate, pentaerythritol triacrylate or tetraacrylate, neopentyl glycol diacrylate, allyl methacrylate, cyclopentadiene diacrylate, the butylene glycol diacrylates or dimethacrylates, trimethylolpropane di-or tri-acrylates, (meth)acrylamide, n-methylol (meth)acrylamide and mixtures thereof. The amount of cross-linker monomer utilized is chosen such that the cross-linker monomer does not materially interfere with film formation.

In one embodiment, the emulsion polymer also contains as polymerized units, at least one photoinitiator monomer which promotes crosslinking of the polymer. The crosslinked polymer has improved dirt pick-up resistance and efflorescence resistance. The photoinitiator monomer is an ethylenically unsaturated monomer which has a functionality capable of absorbing light and creating either radicals or ions. The formation of the radicals or ions may be directly from the photodecomposition of the functionality or may be indirectly by the transfer of energy from the functionality to another group or molecule which may undergo radical or ion formation. Photoinitiator monomers are well known in the art and include vinyl aromatics such as vinyl toluene, vinyl benzophenone, and acryloxybenzophenone. Suitable photoinitiator monomers are also disclosed in U.S Patent 5,248,805 and U.S. Patent 5,439,970. The level of photoinitiator monomer contained as polymerized units in the emulsion polymer may range from 0.1 weight % to 10 weight %, based on the weight of the emulsion polymer.

The emulsion polymer has a glass transition temperature in the range of -10°C to 60°C and preferably in the range of 0°C to 40°C. To form a coating on the cementitious substrate, the emulsion polymer has a minimum film forming temperature below the application temperature of the coating formulation. Coalescents or plasticizing agents may be added to the coating formulation to lower the minimum film formation temperature of the emulsion polymer. The emulsion polymer is further defined as having a weight average molecular weight in the range of 30,000 to 300,000. Preferably the emulsion polymer is provided as an aqueous dispersion of polymer particles wherein the polymer particles have an average particle diameter in the range of 50 nm to 1000 nm, preferably in the range of 60 nm to 500 nm, and more preferably in the range of 80 to 200 nm.

The emulsion polymer may be prepared by suspension polymerization or emulsion polymerization. The polymerization may be a single stage or a multi-stage process. As used herein, the $T_g$ of an emulsion polymer prepared by a multi-stage process is the calculated $T_g$ according to the Fox equation based on the monomers contained as polymerized units in the total emulsion polymer. A preferred process to prepare the emulsion polymer used in the present invention is emulsion polymerization in an aqueous medium.

The preparation of emulsion polymers by emulsion polymerization for use in coating applications is well known in the art. The practice of emulsion polymerization is discussed in detail in D. C. Blackley, *Emulsion Polymerization* (Wiley, 1975). Conventional emulsion polymerization techniques may be used to prepare the emulsion polymer of this invention as an aqueous dispersion polymer. The practice of emulsion polymerization is also discussed in H. Warson, *The Applications of Synthetic Resin Emulsions,* Chapter 2 (Ernest Benn Ltd. London 1972).

Thus, the ethylenically unsaturated monomers including the nonionic monomer, the ionic monomer, the optional functional monomer, and the optional photoinitiator monomer may be emulsified with an anionic or nonionic dispersing agent, using for example from 0.05% to 10% by weight of dispersing agent on the weight of total monomers. Combinations of anionic and nonionic dispersing agents may also be used. High molecular weight polymers such as hydroxy ethyl cellulose, methyl cellulose, and vinyl alcohol may be used as emulsion stabilizers and protective colloids, as may polyelectrolytes such as polyacrylic acid. Acidic monomers, particularly those of low molecular weight, such as acrylic acid and methacrylic acid, are water-soluble, and thus may serve as dispersing agents which aid in emulsifying the other monomers used.

Suitable anionic dispersing agents include, for example, the higher fatty alcohol sulfates, such as sodium lauryl sulfate; alkylaryl sulfonates such as sodium or potassium isopropylbenzene sulfonates or isopropyl naphthalene sulfonates; alkali metal higher alkyl sulfosuccinates, such as sodium octyl sulfosuccinate, sodium N-methyl-N-palmitoyltaurate, sodium oleyl isothionate; and alkali metal salts of alkylarylpolyethoxyethanol sulfates, sulfonates, or phosphate, such as sodium tert-octylphenoxypolyethoxyethyl sulfate having 1 to 5 oxyethylene units; and alkali metal salts of alkyl polyethoxyethanol sulfates, sulfonates, and phosphates.

Suitable nonionic dispersing agents include alkylphenoxypolyethoxyethanols having alkyl groups of from about 7 to 18 carbon atoms and from about 6 to about 60 oxyethylene units, such as heptylphenoxypolyethoxyethanols, methyloctyl phenoxypolyethoxyethanols; polyethoxyethanol derivatives of methylenelinked alkyl phenols; sulfur-containing agents such as those made by condensing from about 6 to about 60 moles of ethylene oxide with nonyl mercaptan, dodecyl mercaptan, or with alkylthiophenols wherein the alkyl groups contain from 6 to 16 carbon atoms; ethylene oxide derivatives of long chained carboxylic acids, such as lauric acid, myristic acid, palmitic acid, oleic acid, or mixtures of acids such as those found in tall oil containing from 6 to 60 oxyethylene units per molecule; analogous ethylene oxide condensates of long chained alcohols such as octyl, decyl, lauryl, or cetyl alcohols, ethylene oxide derivative of etherified or esterified polyhydroxy compounds having a hydrophobic hydrocarbon chain, such as sorbitan monostearate containing from 6 to 60 oxyethylene units; block copolymers of ethylene oxide section combined with one or more hydrophobic propylene oxide sections. Mixtures of alkyl benzenesulfonates and ethoxylated alkylphenols may be employed.

Preferably the emulsion polymer does not contain a copolymerizable surfactant having at least one polymerizable ethylenically unsaturated bond.

A polymerization initiator of the free radical type, such as ammonium or potassium persulfate, may be used alone or as the oxidizing component of a redox system, which also includes a reducing component such as potassium metabisulfite, sodium thiosulfate, or sodium formaldehyde sulfoxylate. The reducing component is frequently referred to as an accelerator. The initiator and accelerator, commonly referred to as catalyst, catalyst system, or redox system, may be used in proportion from about 0.01% or less to 3 % each, based on the weight of monomers to be copolymerized. Examples of redox catalyst systems include t-butyl hydroperoxide/sodium formaldehyde sulfoxylate/Fe(II), and ammonium persulfate/sodium bisulfite/sodium hydrosulfite/Fe(II). The polymerization temperature may be from 10°C to 90°C, or more, and may be optimized for the catalyst system employed, as is conventional. Emulsion polymerization may be seeded or unseeded. Seeded polymerization is preferred and tends to yield aqueous dispersions of polymer having more uniform physical properties than unseeded polymerization.

An important aspect of the present invention is the molecular weight of the emulsion polymer. Emulsion polymers with molecular weights within the molecular weight range specified herein, may be obtained with the use of chain transfer agents such as mercaptans, polymercaptan, and polyhalogen compounds in the polymerization mixture to moderate the molecular weight of the emulsion polymer of this invention. Examples of chain transfer agents which may be used include long chain alkyl mercaptans such as t-dodecyl mercaptans, alcohols such as isopropanol, isobutanol, lauryl alcohol, or t-octyl alcohol, carbon tetrachloride, tetrachloroethylene, trichlorobromoethane. Generally from 0.1 to 3 weight %, based on the weight of total monomer, may be used. Alternately, suitable molecular weights may be obtained by increasing the initiator level, or by a combination of increased initiator level and a chain transfer agent. A preferred polymerization process to prepare the emulsion polymer includes polymerization in the presence of chain transfer agent. A more preferred polymerization process is polymerization in the presence of long chain alkyl mercaptans.

The polymerization process may be a thermal or redox type; that is, free radicals may be generated solely by the thermal dissociation of an initiator species or a redox system may be used. A monomer emulsion containing all or some portion of the monomers to be polymerized may be prepared using the monomers, water, and emulsifiers. A catalyst solution containing catalyst in water may be separately prepared. The monomer emulsion and catalyst solution may be cofed into the polymerization vessel over the course of the emulsion polymerization. The reaction vessel itself may initially contain water. The reaction vessel may also additionally contain seed emulsion and further may additionally contain an initial charge of polymerization catalyst. The temperature of the reaction vessel during the emulsion polymerization may be controlled by cooling to remove heat generated by the polymerization reaction or by heating the reaction vessel. Several monomer emulsions may be simultaneously cofed into the reaction vessel. When multiple monomer emulsions are cofed, they may be of different monomer compositions. The sequence and rates at which the different monomer emulsions are cofed may be altered during the emulsion polymerization process. After addition of the monomer emulsion or emulsions has been completed, the polymerization reaction mixture may be chased to minimize the concentrations of unreacted monomer and unreacted polymerization catalyst species. The pH of the contents of the reaction vessel may also be altered during the course of the emulsion polymerization process. Both thermal and redox polymerization processes may be employed.

The coating formulation of this invention contains emulsion polymer dispersed in water. The pH of the coating formulation is typically in the range of 7 to 10. Various bases may be added to adjust the pH including ammonium hydroxide, sodium hydroxide, potassium hydroxide, and amines such as triethanol amine, 2-amino-2-methyl-1-propanol, dimethylaminoethanol, and triethylamine. The coating formulation may also contain preservatives such as biocides and mildewcides, anti-foaming agents, plasticizers, surfactants, dispersants, coalescents, waxes such as polyethylene wax emulsions, wetting agents, rheology modifiers, colorants, and low molecular weight anionic polymers. The solids level of the nonvolatile components of the coating formulation may range from 10 to 70 weight % based on the weight of the coating formulation. In one embodiment, the coating formulation has a solids level in the range of 10 to 60 weight % based on the weight of the coating formulation, and is suitable for application by spraying.

The coating formulation may contain pigments, such as titanium dioxide, red iron oxide, black iron oxide, yellow iron oxide, and opacifying polymer as disclosed in U.S. 6,045,871. These pigments may be present in the coating formulation at a level in the range of 0 to 25 weight %, based on the total weight of the solids in the coating formulation.

In one embodiment, the coating formulation contains a photoinitiator molecule which may promote crosslinking of the polymer and provides improved dirt pick-up resistance and efflorescence resistance to the coating. Upon exposure to actinic radiation, the photoinitiator molecule in the coating may absorb the actinic radiation and by direct decomposition or by energy transfer to another molecule or moiety, cr eates either radicals or ions. The radicals and ions initiate reactions leading to the formation of crosslinks between polymer chains. Suitable photoinitiator molecules are used in radiation curable coatings and include benzophenone, benzotriazoles, $\alpha$-hydroxyketone derivatives such as 2-hydroxyacetophenone. Mixtures of photoinitiator molecules may be used. The choice of a suitable photoinitiator molecule and the level of the photoinitiator molecule in the coating formulation may depend upon the wavelength of the actinic radiation, the efficiency of the photoinitiator . molecule to generate radicals or ions, the solubility of the photoinitiator molecule in the coating formulation, and the intended end use of the coating containing the photoinitiator molecule. The photoinitiator molecule may be added directly into the coating formulation or may be first dissolved into a suitable solvent and then added to the coating formulation. Suitable solvents include solvents and coalescents which are miscible with water. The photoinitiator molecule may be added at a level in the range of 0.1 weight % to 10 weight %, based on polymer solids. In this embodiment, the polymer used in the coating formulation of this invention may have a composition which does not include photoinitiator monomer as a polymerized unit. Alternatively, the coating formulation may include the polymer including photoinitiator monomer as a polymerized unit and the photoinitiator molecule.

In another embodiment, the coating formulation may also contain an ethylenically unsaturated polymer in addition to the emulsion polymer of this invention. Included in this coating formulation is a photoinitiator molecule or the emulsion polymer containing the photoinitiator monomer as a polymerized unit. As used herein, ethylenically unsaturated polymer refers to latex polymers containing ethylenically unsaturated groups which may undergo crosslinking in the presence of radicals or ions. Suitable ethylenically unsaturated polymers are disclosed in U.S. Patent 5,409,971 which teaches a crosslinkable ultraviolet-curable latex polymer. After drying of the coating formulation, the dried coating may be exposed to actinic radiation to induce crosslinking of the ethylenically unsaturated polymer and provide coatings with high gloss, dirt pick-up resistance, and efflorescence resistance. The ratio of the ethylenically unsaturated polymer to the emulsion polymer in the coating formulation may be in the range of 0:1 to 10:1, preferably in the range of 1:10 to 2:1, and more preferably in the range of 1:5 to 1:1, based on dry weight.

The coating formulation may be prepared by admixing the emulsion polymer with the other components of the coating formulation. The components of the coating formulation may be added in any addition order provided that there is no destabilization of the coating formulation or any component.

Examples of cementitious substrates include roof tiles, wall tiles, roof shingles, roof slates, concrete slabs such as patio floors, cement rendered walls, lap siding used on the exterior of building walls, and concrete pipes. The cementitious substrates may be coated with a pigment slurry, often referred to as a color coat, which includes pigment, cement, and sand to provide a colored surface.

A clear coating is often applied onto the color coat to enhance the gloss of the concrete roof tile and to protect the tile from the effects of weathering and to minimize efflorescence. Clear coatings are known to reduce efflorescence on concrete roof tiles.

The coating formulation may be applied onto the cementitious substrate by conventional means such as spraying, with a trowel or knife, pouring, brushing, and curtain coating. The dry film thickness for the coating formulation may be in the range of 2.5 μm to 250 μm. The coating formulation may dry or be allowed to dry at ambient conditions, such as temperatures in the range of 10°C to 30°C. Alternatively, heat may be applied to dry the coating formulation, for example, heating in the temperature range of 25°C to 100°C. In the method of this invention, the coating formulation is applied onto a green cementitious substrate and the coated green cementitious substrate is cured to provide a gloss coated cementitious substrate. Alternatively, a color coat may be first applied onto the green cementitious substrate followed by the application of the coating formulation onto the color coat. The coating composition may be dried prior to the cure step or dried during the cure step of the cementitious substrate. In one embodiment, the coated green cementitious substrate is allowed to cure at ambient conditions. In an alternate embodiment, cure is effected by introducing the coated green cementitious substrate into a chamber with controlled temperature and humidity conditions. Suitable temperature and humidity conditions are temperatures in the range of 35° to 100°C and relative humidity as high as 95%. The time required to obtained cure may be in the range of 4 to 12 hours and will be dependent on the temperature and relative humidity.

The coating prepared from the coating formulation containing photoinitiators such as a photoinitiator molecule, a polymer containing photoinitiator monomer as polymerized units, or a mixture thereof, may be exposed to actinic radiation after application of the coating formulation onto a green cementitious substrate but prior to cure, after cure of a coated green cementitious substrate, or after application of the coating formulation onto a cured cementitious substrate. Coated roof tiles and other coated cementitious substrates including photoinitiators in the coating are suitable for exterior use in locations with strong exposure to sunlight such as equatorial and tropical locations.

Test Methods

60° Gloss Measurement: The method for determining the gloss of the coated cementitious substrate samples is described in "Annual Book of ASTM Standards, Section 15, Volume 15.04, Test Procedure ASTM D 1455. The 60° gloss was measured with a Gardner Byk Labotron Gloss unit.

Degree of Efflorescence Test Procedure: The degree of primary efflorescence is the appearance of the coated cementitious substrate immediately after curing.

The degree of secondary efflorescence is the long term efflorescence resistance due to weathering of the coated cementitious substrate. This was evaluated in an accelerated laboratory test in which the coated cementitious substrate was exposed to the condensation of moisture in a 60°C water bath (Precision Water Bath Model 270 circulating water bath) for four days. The test was conducted by placing the coated cementitious substrate above the water bath on a metal grate which held the coated side 4 cm above and facing the 60°C water.

The degree of efflorescence was characterized visually on an efflorescence scale of 0 to 10, where 10 represents a coated cementitious substrate surface without efflorescence and 0 represents a coated cementitious substrate with efflorescence completely covering the surface. Ratings of 5 and above were acceptable ratings. Additionally, the degree of efflorescence was measured using colorimetric measurements. Colorimetric measurements were made using the L* scale which measures black to white according to a scale of 0 (black) to 100 (white). As the coated cementitious substrate had a black slurry coat, the L* value increases as the degree of efflorescence increases since efflorescence leads to the formation of white deposits on the substrate surface.

Dirt Pick Up Resistance Test Procedure:

A 102 μm (4 mil) thick film of the coating formulation was applied with a drawdown bar onto an aluminum panel ("Q" aluminum panel, mill finish, 3105 H24 (0.6 mm x 102 mm x 305 mm), from Q-Panel Lab Products, Cleveland, OH). The coated aluminum panel was allowed to dry for 24 hours at ambient conditions.

Next, half of panel was covered and the panel was exposed to UVA radiation from two 40 watt low pressure mercury lamps for 24 hours.

An iron oxide slurry was prepared by dissolving two drops of Tamol 731 dispersant (Rohm and Haas Co.) into 250 g of water, adding 125 g Bayferrox 110 red iron oxide (Bayer Corp.), and then mixing the slurry until a uniform dispersion was obtained.

Next, a uniform coating of the iron oxide slurry was brushed onto half of the coated aluminum panel. The iron oxide slurry coated panels were allowed to dry at ambient conditions for 3 hours and then placed for one hour in a 60°C oven. Next, the iron oxide slurry coated panels were removed from the oven and allowed to cool to room temperature. The iron oxide slurry coated panels were washed under running tepid tap water by rubbing lightly and evenly with a cheesecloth pad making sure to remove the excess iron oxide slurry. A new cheesecloth pad was used for each iron oxide slurry coated panel. The washed panels were allowed to dry at ambient conditions for at least four hours before being rated for dirt pick up resistance. The dirt pick up resistance was rated with respect to a control coated panel according to the following scale:

    5 = much better than control
    4 = better than control
    3 = equal to control
    2 = worse than control
    1 = much worse than control.

Example 1 - Preparation of Emulsion Polymers

A monomer emulsion was prepared by mixing 600 g deionized water (DI water), 60.9 g sodium dodecylbenzenesolfonate (23% active), 910 g butyl acrylate (BA), 1064 g methyl methacrylate (MMA), 26.0 g methacrylic acid (MAA), and 20.0 g n-dodecyl mercaptan (nDDM). A 1 gallon stirred reactor was charged with 1070 g deionized water and 26 g sodium dodecylbenzenesolfonate (23% active). After the reactor content was heated to 85°C, a solution of 2 g sodium carbonate in 20 g DI water was added to the reactor. Next, 90.0 g of the monomer emulsion was added, followed by a rinse of 40 g of DI water. Immediately thereafter, a solution of 6 g of ammonium persulfate in 30 g of DI water was added. The remaining monomer emulsion was added to the reactor while maintaining a temperature of 82°C. In a separate feed, a solution of 2 g ammonium persulfate in 120 g DI water was added to the reactor. The final reaction mixture was neutralized to pH 8.8 with 28 % aqueous ammonia. The emulsion polymer of Example 1.4 had an average particle diameter of 104 nm, a solids level of 49.5%, and a Brookfield viscosity of 556 cps. The emulsion polymer had a final composition of 45.5BA/53.2MMA/1.3MAA and a $T_g$ calculated according to the Fox equation of 11.6°C.

The weight average molecular weight, $M_w$, of the emulsion polymer was determined by gel permeation chromatography using tetrahydrofuran solvent. The measurements are based on a polymethylmethacrylate equivalent. The emulsion polymer particle dispersion was deionized with Amberlite IRN-77 ion exchange resin (Rohm and Haas Co.) prior to molecular weight measurements.

Comparative A, Comparative B, and Examples 1.1-1.3 were prepared by the above procedure except the level of nDDM was changed according to Table 1.1.

Table 1.1

| Mw of Polymers | | |
|---|---|---|
| Emulsion Polymer | nDDM Level (weight % based on total monomer) | Mw |
| Comparative A | 0 | $1.2 \times 10^6$ |
| Comparative B | 0.10 | $4 \times 10^5$ |
| Example 1.1 | 0.25 | $2 \times 10^5$ |
| Example 1.2 | 0.50 | $1 \times 10^5$ |
| Example 1.3 | 0.75 | $7 \times 10^4$ |
| Example 1.4 | 1.00 | $5 \times 10^4$ |

Example 2 - Coating Formulations

Coating formulations were prepared including the emulsion polymers of Examples 1.1-1.4 and Comparatives A and B, and other ingredients listed in Table 2.1. The ingredients are listed in the order of addition and were mixed with a Lightnin' mixer (Mixing Equipment Co., Inc.) for 30 minutes at ambient conditions.

Table 2.1

| Coating Formulation Ingredients | | |
|---|---|---|
| Material | Function | Parts by Weight |
| Water | diluent | 27.56 |
| Emulsion Polymer | vehicle | 200 |
| Kathon CG/ICP (1.5%)[1] | biocide | 0.03 |
| Drew L-108[2] | defoamer | 0.10 |
| Texanol[3] | coalescent | 6.00 |
| Michemlube 743 (32%)[4] | polyethylene wax emulsion | 3.13 |
| Tamol 165 (21%)[1] | dispersant | 2.38 |
| Surfynol 104E (50%)[5] | wetting agent | 0.60 |

[1] Rohm and Haas Company

[2] Drew Industrial Division of Ashland Chemical Co.

[3] Eastman Chemical Co.

[4] Michelman Wax (Michelman Chemical Incorporated)

[5] Air Products and Chemicals Inc.

Table 2.2

| Coating Formulations | |
|---|---|
| Coating Formulation | Emulsion Polymer |
| Comparative C | Comparative A |
| Comparative D | Comparative B |

Table 2.2   (continued)

| Coating Formulations | |
| --- | --- |
| Coating Formulation | Emulsion Polymer |
| Example 2.1 | Example 1.1 |
| Example 2.2 | Example 1.2 |
| Example 2.3 | Example 1.3 |
| Example 2.4 | Example 1.4 |

Example 3 - Preparation of Coated Cementitious Substrate

Preparation of Green Cementitious Substrate: A sand/cement mixture was prepared by adding 850 g Type I Portland cement and 2550 g 45 mesh sand and mixing on a Hobart Mixer, Model N-50 (Hobart Canada, Ontario, Canada). Next, 408 g deionized water was slowly added and mixed into the sand/cement mixture to prepare a concrete mix. A sample patty, Patty-A, was prepared by pouring the concrete mix into a 8.5 cm diameter Petri dish and flattening the surface with a spatula to provide a smooth surface.

A black slurry was prepared by adding 150 g Bayferrox 318M black iron oxide (Mobay Corporation) to 900 g deionized water with stirring to completely wet the black iron oxide. Next, 1500 g Type I Portland cement was slowly added with continuous stirring to obtain a uniform mixture. Then, 750 g 45 mesh sand was added until the sand was thoroughly mixed into the mixture to provide the black slurry. A layer of black slurry, approximately 0.4 mm thick, was applied onto the smoothed surface of Patty-A to form a green cementitious substrate sample.

A layer of the coating formulation, approximately 0.025 mm thick, was applied by spray onto the black surface of the green cementitious substrate sample. Cure of the coated green cementitious substrate sample was achieved in a humidity/oven chamber at 75% relative humidity with exposure to the following cure conditions: 1 hour at 20°C; 1 hour at 30°C; 1 hour at 40°C, and 2 hours at 50°C to provide the coated cementitious substrate.

Example 4 - Evaluation of Coated Cementitious Substrate

After cure, the initial 60° gloss value, the initial degree of efflorescence rating, and the initial L* value were determined for the coated cementitious substrate sample. The results for the coating formulations are listed in Table 4.1.

Table 4.1

| Properties of Coated Cementitious Substrates | | | | |
| --- | --- | --- | --- | --- |
| Coating Formulation | Mw | Initial 60° Gloss | Initial L* | Initial Degree of Primary Efflorescence |
| Comparative C | $1.2 \times 10^6$ | 2 | 35 | 6 |
| Comparative D | $4 \times 10^5$ | 2 | 35 | 6 |
| Example 2.1 | $2 \times 10^5$ | 6 | 32 | 7 |
| Example 2.2 | $1 \times 10^5$ | 5 | 32 | 7 |
| Example 2.3 | $7 \times 10^4$ | 7 | 30 | 8 |
| Example 2.4 | $5 \times 10^4$ | 12 | 26 | 10 |

The results in Table 4.1 show that the polymer of this invention, as exemplified by Examples 2.1 to 2.4, provided coated cementitious substrates with higher initial gloss, a darker black appearance, and less primary efflorescence than the comparative polymers of higher molecular weight.

Example 5 - Preparation of Emulsion Polymers Including Vinyl Benzophenone

Emulsion polymers including vinyl benzophenone (VB), a photoinitiator monomer as a polymerized unit, were prepared according to the process described in Example 1. The emulsion polymers were formulated into the coating composition of Example 2.

Table 5.1

| Coating Formulations | | |
|---|---|---|
| Coating Formulation | Emulsion Polymer Composition | Mw |
| Example 5.1 | 45.5BA/51.2MMA/1.9VB/1.3MAA | $5 \times 10^4$ |
| Example 5.2 | 45.5BA/49.2MMA/4VB/1.3MAA | $5 \times 10^4$ |

Example 6 - Preparation and Evaluation of Coating Formulations Including Photoinitiator

Coating formulations based on Example 2 were prepared including benzophenone as a photoinitiator. The benzophenone was either part of the emulsion polymer, as in Examples 5.1 and 5.2 which included vinyl benzophenone as a polymerized unit, or was added to the coating formulation containing the emulsion polymer of Example 2.4 as a 50% benzophenone solution in Texanol. The emulsion polymers of Examples 2.4, 5.1, and 5.2 has a Mw of $5 \times 10^4$.

Table 6.1

| Coating Formulations Including Photoinitiator | | | |
|---|---|---|---|
| Coating Formulation | Polymer | Polymer Composition | Added Photoinitiator Molecule and Level |
| Example 6.1 | Example 5.1 | 45.5BA/51.2MMA/1.9VB/ 1.3MAA | 0 |
| Example 6.2 | Example 5.2 | 45.5BA/49.2MMA/4VB/ 1.3MAA | 0 |
| Example 6.3 | Example 1.4 | 45.58A/53.2MMA/1.3MAA | 2% Benzophenone |
| Example 6.4 | Example 1.4 | 45.5BA/53.2MMA/1.3MAA | 4% Benzophenone |

Coated cementitious substrates were prepared as described in Examples 3 and 4. After cure, a section of the coated cementitious substrates were covered and were then exposed to 12 hours of UVA radiation from two 40 watt low pressure mercury lamps. The coated cementitious substrates were placed 5 cm from the lamps. The initial 60° gloss, initial L*, and initial degree of primary efflorescence were evaluated and the results are listed below in Table 6.2.

Table 6.2

| Properties of Coated Cementitious Substrates | | | | |
|---|---|---|---|---|
| Coating Formulation | Mw | Initial 60° Gloss | Initial L* | Initial Degree of Primary Efflorescence |
| Comparative D | $4 \times 10^5$ | 2 | 35 | 6 |
| Example 6.1 | $5 \times 10^4$ | 10 | 25 | 10 |
| Example 6.2 | $5 \times 10^4$ | 10 | 26 | 10 |
| Example 6.3 | $5 \times 10^4$ | 9 | 27 | 9 |
| Example 6.4 | $5 \times 10^4$ | 10 | 26 | 10 |

The results show that the emulsion polymers of this invention provided higher initial 60° gloss and less efflorescence as evidenced by the low initial L* values and higher initial degree of primary efflorescence resistance rating than the cementitious substrate coated with comparative D.

The degree of secondary efflorescence was evaluated using a second set of coated cementitious samples. Comparative D is a emulsion polymer with a high molecular weight which is outside the range of molecular weights of this invention. The evaluation also included a coated cementitious substrate coated with the coating formulation of Example 2.4. This coating did not contain a photoinitiator and was included to show the effect of the photoinitiator in the coated cementitious substrate. The results in Table 6.3 show that the coated cementitious substrates including a photoinitiator had acceptable levels of degree of secondary efflorescence.

Table 6.3

| Secondary Efflorescence Evaluation | | | | |
|---|---|---|---|---|
| Coating | Degree of Primary Efflorescence | Degree of Secondary Efflorescence | Initial L* | Final L* |
| Comparative D (high Mw) | 7 | 7 | 32 | 34 |
| Example 2.4 (no photoinitiator) | 10 | 3 | 29 | 37 |
| Example 6.1 | 10 | 6 | 28 | 31 |
| Example 6.2 | 10 | 6 | 29 | 32 |
| Example 6.3 | 9 | 6 | 29 | 33 |
| Example 6.4 | 10 | 6 | 29 | 32 |

The results in Tables 6.2 and 6.3 show that Examples 6.1 to 6.2, the coatings which contained emulsion polymer with molecular weight in the range of 30,000 to 300,000, and photoinitiator either as a polymerized unit in the emulsion polymer or as a component of the coating formulation, provided a combination of high gloss, and acceptable primary and secondary efflorescence resistance compared to the higher molecular weight emulsion polymer of Comparative D.

Coated aluminum panels were prepared and evaluated according to the Dirt Pick-Up Test Procedure.

Table 6.4

| Dirt Pick Up Resistance of Coatings | | |
|---|---|---|
| Sample | Treated Side (no UVA exposure) | Treated Side (UVA exposure) |
| Comparative D | 3 | 3 |
| Example 6.1 | 1 | 3 |
| Example 6.2 | 1 | 3 |
| Example 6.3 | 1 | 2 |
| Example 6.4 | 1 | 4 |

The results in Table 6.4 show that the dirt pick-up resistance of the coatings prepared from coating formulation containing emulsion polymers with molecular weights in the range of 30,000 to 300,000 was improved by the addition of photoinitiator, either as a polymerized unit of the emulsion polymer as in Examples 6.1 and 6.2, or as a photoinitiator molecule added to the coating formulation as in Examples 6.3 and 6.4, and exposure to UVA light. The results indicate that the coatings of Examples 6.1 to 6.4 are suitable for exterior use.

Example 7 - Coating Formulation Including Ethylenically Unsaturated Polymer

A coating formulation was also prepared including an ethylenically unsaturated polymer. This coating formulation, Example 7, was based on the coating formulation of Example 2 and included 20 weight % based on the total weight of polymer of Roshield 3120 (Rohm and Haas Co), an ethylenically unsaturated latex polymer, 80 weight % based on the total weight of polymer of Example 1.4, and 1.5 weight % based on the total solids of the coating formulation of Darocure 1173 photoinitiator molecule (Ciba Specialty Chemicals). The coating formulation was applied onto green cementitious substrate and cured according to Example 4.

Table 7.1

| Properties of Coated Cementitious Substrates | | | | |
|---|---|---|---|---|
| Coating Formulation | Mw | Initial 60° Gloss | Initial L* | Initial Degree of Primary Efflorescence |
| Comparative D | $4 \times 10^5$ | 2 | 35 | 6 |
| Example 7 | $5 \times 10^4$ | 12 | 27 | 10 |

The results in Table 7.1 show that the coating formulation containing the ethylenically unsaturated polymer, Example 7, had higher initial gloss and less efflorescence as measured by the lower L* value and a higher initial degree of primary efflorescence value than the comparative coating formulation.

Table 7.2

| Secondary Efflorescence Evaluation | | | | |
|---|---|---|---|---|
| Coating | Degree of Primary Efflorescence | Degree of Secondary Efflorescence | Initial L* | Final L* |
| Comparative D | 7 | 7 | 32 | 34 |
| Example 7 | 10 | 8 | 28 | 29 |

Further, the coating formulation including the ethylenically unsaturated polymer had less secondary efflorescence as indicated by the degree of secondary efflorescence rating and a lower final L* value than the comparative coating.

Also evaluated was the dirt pick-up resistance of a coating formed from the coating formulation of Example 7. Coated aluminum panels were prepared and evaluated according to the Dirt Pick-Up Test Procedure.

Table 7.3

| Dirt Pick Up Evaluation | | |
|---|---|---|
| Sample | Treated Side (no UVA exposure) | Treated Side (UVA exposure) |
| Comparative D | 3 | 3 |
| Example 7 | 1 | 4 |

The results in Table 7.3 show that exposure to ultraviolet light improved the dirt pick-up resistance of the coating formed from the coating formulation of Example 7 which contained ethylenically unsaturated polymer.

**Claims**

1. A method for providing a gloss coated cementitious substrate comprising the steps of:

   a) preparing a coating formulation comprising an emulsion polymer comprising as polymerized units:

   i) 75 to 99.5 weight % at least one nonionic monomer based on the weight of said emulsion polymer;
   ii) 0.5 to 5 weight % at least one ionic monomer based on the weight of said emulsion polymer;
   iii) 0 to 10 weight % at least one functional monomer based on the weight of said emulsion polymer; and
   iv) 0 to 10 weight % at least one photoinitiator monomer based on the weight of said emulsion polymer;

   wherein the sum of said nonionic monomer, said ionic monomer, said functional monomer, and said photoinitiator monomer equals 100%;
   wherein said emulsion polymer has a weight average molecular weight in the range of 30,000 to 300,000;
   wherein said emulsion polymer has a glass transition temperature in the range of -10°C to 60°C;
   b) applying said coating formulation onto a green cementitious substrate to form a coated green cementitious substrate; and
   c) curing or allowing to cure said coated green cementitious substrate to form said gloss coated cementitious substrate.

2. The method of claim 1 wherein said emulsion polymer comprises as polymerized units from 0.5 to 10 weight % photoinitiator monomer.

3. The method of claim 1 wherein said coating formulation further comprises from 0.5 weight % to 10 weight % photoinitiator molecule, based on the weight of said polymer.

4. The method of claim 2 or claim 3 further comprising the step of exposing said gloss coated cementitious substrate to actinic r adiation.

**5.** The method of claim 4 wherein said coating formulation further comprises an ethylenically unsaturated polymer.

**6.** The method of claim 1 wherein said gloss coated substrate has 60° gloss reading of 5 or greater.

**7.** An emulsion polymer comprising as polymerized units from:

a) 75 to 99 weight % at least one nonionic monomer based on the weight of said emulsion polymer;
b) 0.5 to 5 weight % at least one ionic monomer based on the weight of said emulsion polymer;
c) 0 to 10 weight % at least one functional monomer based on the weight of said emulsion polymer; and
d) 0.5 to 10 weight % at least one photoinitiator monomer based on the weight of said emulsion polymer;

wherein the sum of said nonionic monomer, said ionic monomer, said functional monomer, and said photoinitiator monomer equals 100%;
wherein said emulsion polymer has a weight average molecular weight in the range of 30,000 to 300,000; and
wherein said emulsion polymer has a glass transition temperature in the range of -10°C to 60°C.

**8.** The emulsion polymer of Claim 7 wherein said emulsion polymer has a glass transition temperature in the range of 0°C to 40°C.

**9.** A coating formulation comprising

a) an emulsion polymer comprising as polymerized units from:

i) 75 to 99.5 weight % at least one nonionic monomer based on the weight of said emulsion polymer;
ii) 0.5 to 5 weight % at least one ionic monomer based on the weight of said emulsion polymer;
iii) 0 to 10 weight % at least one functional monomer based on the weight of said emulsion polymer; and
iv) 0 to 10 weight % at least one photoinitiator monomer based on the weight of said emulsion polymer;

wherein the sum of said nonionic monomer, said ionic monomer, said functional monomer, and said photoinitiator monomer equals 100%;
wherein said emulsion polymer has a weight average molecular weight in the range of 30,000 to 300,000;
wherein said emulsion polymer has a glass transition temperature in the range of -10°C to 60°C, and
b) 0.5 weight % to 10 weight % photoinitiator molecule, based on the weight of said emulsion polymer.

**10.** The coating formulation of Claim 9 wherein said emulsion polymer has a glass transition temperature in the range of 0°C to 40°C.

**11.** An article comprising a glossy coated cementitious substrate comprising:

a) a cementitious substrate; and
b) a coating formed from a coating formulation comprising an emulsion polymer comprising as polymerized units from:

i) 75 to 99.5 weight % at least one nonionic monomer based on the weight of said emulsion polymer;
ii) 0.5 to 5 weight % at least one ionic monomer based on the weight of said emulsion polymer;
iii) 0 to 10 weight % at least one functional monomer based on the weight of said emulsion polymer; and
iv) 0 to 10 weight % at least one photoinitiator monomer based on the weight of said emulsion polymer;

wherein the sum of said nonionic monomer, said ionic monomer, said functional monomer, and said photoinitiator monomer equals 100%;
wherein said emulsion polymer has a weight average molecular weight in the range of 30,000 to 300,000;
wherein said emulsion polymer has a glass transition temperature in the range of -10°C to 60°C, and
wherein said coating formulation is applied onto said cementitious substrate prior to cure of said cementitious substrate.

**12.** The article of Claim 11 wherein said emulsion polymer further comprises from 0.5 to 10 weight % photoinitiator monomer based on weight of said emulsion polymer.

**13.** The article of Claim 11 wherein said coating formulation further comprises from 0.5 to 10 weight % photoinitiator molecule, based on the weight of said emulsion polymer.

**14.** The article of claim 12 or claim 13 wherein said article is exposed to actinic radiation.

**15.** The article of claim 14 wherein said coating formulation further comprises an ethylenically unsaturated polymer.

**Patentansprüche**

**1.** Verfahren zur Bereitstellung eines mit Glanz überzogenen zementartigen Substrats, umfassend die Schritte:

a) Herstellen einer Beschichtungsformulierung, umfassend ein Emulsionspolymer, umfassend als polymerisierte Einheiten:

i) 75 bis 99,5 Gewichtsprozent von mindestens einem nicht-ionischen Monomer, bezogen auf das Gewicht des Emulsionspolymers;
ii) 0,5 bis 5 Gewichtsprozent von mindestens einem ionischen Monomer, bezogen auf das Gewicht des Emulsionspolymers;
iii) 0 bis 10 Gewichtsprozent von mindestens einem funktionellen Monomer, bezogen auf das Gewicht des Emulsionspolymers; und
iv) 0 bis 10 Gewichtsprozent von mindestens einem Photoinitiator-Monomer, bezogen auf das Gewicht des Emulsionspolymers;

wobei die Summe des nicht-ionischen Monomers, des ionischen Monomers, des funktionellen Monomers und des Photoinitiator-Monomers 100% ist;
wobei das Emulsionspolymer ein gewichtsgemitteltes Molekulargewicht in der Größenordnung von 30.000 bis 300.000 besitzt;
wobei das Emulsionspolymer eine Glasübergangstemperatur im Bereich von -10°C bis 60°C besitzt;
b) Auftragen der Beschichtungsformulierung auf einen zementartigen Substratrohling, um einen beschichteten zementartigen Substratrohling zu bilden; und
c) Aushärten oder Aushärten lassen des beschichteten zementartigen Substratrohlings, um das mit Glanz überzogene zementartige Substrat zu bilden.

**2.** Das Verfahren nach Anspruch 1, wobei das Emulsionspolymer als polymerisierte Einheiten zwischen 0,5 und 10 Gewichtsprozent Photoinitiator-Monomer umfasst.

**3.** Das Verfahren nach Anspruch 1, wobei die Beschichtungsformulierung weiterhin zwischen 0,5 und 10 Gewichtsprozent Photoinitiator-Molekül, bezogen auf das Gewicht des Polymers, umfasst.

**4.** Das Verfahren nach Anspruch 2 oder 3, weiterhin umfassend den Schritt des Aussetzens des mit Glanz überzogenen zementartigen Substrats einer aktinischen Bestrahlung.

**5.** Das Verfahren nach Anspruch 4, wobei die Beschichtungsformulierung weiterhin ein ethylenisch ungesättigtes Polymer umfasst.

**6.** Das Verfahren nach Anspruch 1, wobei das mit Glanz überzogene Substrat einen 60°-Glanzmesswert von 5 oder größer besitzt.

**7.** Ein Emulsionspolymer, umfassend als polymerisierte Einheiten von:

a) 75 bis 99 Gewichtsprozent von mindestens einem nicht-ionischen Monomer, bezogen auf das Gewicht des Emulsionspolymers;
b) 0,5 bis 5 Gewichtsprozent von mindestens einem ionischen Monomer, bezogen auf das Gewicht des Emulsionspolymers;
c) 0 bis 10 Gewichtsprozent von mindestens einem funktionellen Monomer, bezogen auf das Gewicht des Emulsionspolymers; und
d) 0,5 bis 10 Gewichtsprozent von mindestens einem Photoinitiator-Monomer, bezogen auf das Gewicht des Emulsionspolymers;

wobei die Summe des nicht-ionischen Monomers, des ionischen Monomers, des funktionellen Monomers und des Photoinitiator-Monomers 100% ist;
wobei das Emulsionspolymer ein gewichtsgemitteltes Molekulargewicht in der Größenordnung von 30.000 bis 300.000 besitzt; und
wobei das Emulsionspolymer eine Glasübergangstemperatur im Bereich von -10°C bis 60°C aufweist.

8. Das Emulsionspolymer nach Anspruch 7, wobei das Emulsionspolymer eine Glasübergangstemperatur im Bereich von 0°C bis 40°C aufweist.

9. Eine Beschichtungsformulierung, umfassend:

a) ein Emulsionspolymer, umfassend als polymerisierte Einheiten von:

i) 75 bis 99,5 Gewichtsprozent von mindestens einem nicht-ionischen Monomer, bezogen auf das Gewicht des Emulsionspolymers;
ii) 0,5 bis 5 Gewichtsprozent von mindestens einem ionischen Monomer, bezogen auf das Gewicht des Emulsionspolymers;
iii) 0 bis 10 Gewichtsprozent von mindestens einem funktionellen Monomer, bezogen auf das Gewicht des Emulsionspolymers; und
iv) 0 bis 10 Gewichtsprozent von mindestens einem Photoinitiator-Monomer, bezogen auf das Gewicht des Emulsionspolymers;

wobei die Summe des nicht-ionischen Monomers, des ionischen Monomers, des funktionellen Monomers und des Photoinitiator-Monomers 100% ist;
wobei das Emulsionspolymer ein gewichtsgemitteltes Molekulargewicht in der Größenordnung von 30.000 bis 300.000 besitzt;
wobei das Emulsionspolymer eine Glasübergangstemperatur im Bereich von -10°C bis 60°C aufweist; und
b) 0,5 bis 10 Gewichtsprozent Photoinitiator-Molekül, bezogen auf das Gewicht des Emulsionspolymers.

10. Die Beschichtungsformulierung nach Anspruch 9, wobei das Emulsionspolymer eine Glasübergangstemperatur im Bereich von 0°C bis 40°C aufweist.

11. Ein Gegenstand, umfassend ein glänzend beschichtetes zementartiges Substrat, umfassend:

a) ein zementartiges Substrat; und
b) eine Beschichtung, gebildet aus einer Beschichtungsformulierung, umfassend ein Emulsionspolymer, umfassend als polymerisierte Einheiten von:

i) 75 bis 99,5 Gewichtsprozent von mindestens einem nicht-ionischen Monomer, bezogen auf das Gewicht des Emulsionspolymers;
ii) 0,5 bis 5 Gewichtsprozent von mindestens einem ionischen Monomer, bezogen auf das Gewicht des Emulsionspolymers;
iii) 0 bis 10 Gewichtsprozent von mindestens einem funktionellen Monomer, bezogen auf das Gewicht des Emulsionspolymers; und
iv) 0 bis 10 Gewichtsprozent von mindestens einem Photoinitiator-Monomer, bezogen auf das Gewicht des Emulsionspolymers;

wobei die Summe des nicht-ionischen Monomers, des ionischen Monomers, des funktionellen Monomers und des Photoinitiator-Monomers 100% ist;
wobei das Emulsionspolymer ein gewichtsgemitteltes Molekulargewicht in der Größenordnung von 30.000 bis 300.000 besitzt;
wobei das Emulsionspolymer eine Glasübergangstemperatur im Bereich von -10°C bis 60°C aufweist, und
wobei die Beschichtungsformulierung vor der Aushärtung des zementartigen Substrats auf das zementartige Substrat aufgetragen wird.

12. Der Gegenstand nach Anspruch 11, wobei das Emulsionspolymer weiterhin umfasst zwischen 0,5 und 10 Gewichtsprozent Photoinitiator-Monomer, bezogen auf das Gewicht des Emulsionspolymers.

13. Der Gegenstand nach Anspruch 11, wobei die Beschichtungsformulierung weiterhin umfasst zwischen 0,5 und 10 Gewichtsprozent Photoinitiator-Molekül, bezogen auf das Gewicht des Emulsionspolymers.

14. Der Gegenstand nach Anspruch 12 oder 13, wobei der Gegenstand aktinischer Bestrahlung ausgesetzt wird.

15. Der Gegenstand nach Anspruch 14, wobei die Beschichtungsformulierung weiterhin umfasst ein ethylenisch ungesättigtes Polymer.

**Revendications**

1. Procédé de production d'un substrat à base de ciment recouvert d'un revêtement brillant comprenant les étapes consistant à :

   a) préparer une formulation de revêtement comprenant un polymère en émulsion comprenant, en tant que motifs polymérisés :

   i) 75 à 99,5 % en poids d'au moins un monomère non ionique, sur la base du poids dudit polymère en émulsion ;
   ii) 0,5 à 5 % en poids d'au moins un monomère ionique, sur la base du poids dudit polymère en émulsion ;
   iii) 0 à 10 % en poids d'au moins un monomère fonctionnel, sur la base du poids dudit polymère en émulsion ; et
   iv) 0 à 10 % en poids d'au moins un monomère photoamorceur, sur la base du poids dudit polymère en émulsion ;

   où la somme dudit monomère non ionique, dudit monomère ionique, dudit monomère fonctionnel et dudit monomère photoamorceur est égale à 100 % ; où ledit polymère en émulsion a une masse moléculaire moyenne en poids dans la plage de 30 000 à 300 000 ;
   où ledit polymère en émulsion a une température de transition vitreuse dans la plage de -10 °C à 60 °C ;
   b) appliquer ladite formulation de revêtement sur un substrat à base de ciment cru pour former un revêtement sur le substrat à base de ciment cru ; et
   c) cuire ou laisser durcir ledit substrat à base de ciment cru revêtu pour former ledit substrat à base de ciment recouvert d'un revêtement brillant.

2. Procédé selon la revendication 1, dans lequel ledit polymère en émulsion comprend, en tant que motifs polymérisés, de 0,5 à 10 % en poids de monomère photoamorceur.

3. Procédé selon la revendication 1, dans lequel ladite formulation de revêtement comprend en outre de 0,5 % en poids à 10 % en poids de molécule de type photoamorceur, sur la base du poids dudit polymère.

4. Procédé selon la revendication 2 ou la revendication 3, comprenant en outre l'étape consistant à exposer ledit substrat à base de ciment recouvert du revêtement brillant à un rayonnement actinique.

5. Procédé selon la revendication 4, dans lequel ladite formulation de revêtement comprend en outre un polymère à insaturation éthylénique.

6. Procédé selon la revendication 1, dans lequel ledit substrat recouvert d'un revêtement brillant a un indice de brillance à 60° de 5 ou plus.

7. Polymère en émulsion comprenant, en tant que motifs polymérisés :

   a) 75 à 99 % en poids d'au moins un monomère non ionique, sur la base du poids dudit polymère en émulsion ;
   b) 0,5 à 5 % en poids d'au moins un monomère ionique, sur la base du poids dudit polymère en émulsion ;
   c) 0 à 10 % en poids d'au moins un monomère fonctionnel, sur la base du poids dudit polymère en émulsion ; et
   d) 0,5 à 10 % en poids d'au moins un monomère photoamorceur, sur la base du poids dudit polymère en émulsion ;

où la somme dudit monomère non ionique, dudit monomère ionique, dudit monomère fonctionnel et dudit monomère photoamorceur est égale à 100 % ; où ledit polymère en émulsion a une masse moléculaire moyenne en poids dans la plage de 30 000 à 300 000 ; et

où ledit polymère en émulsion a une température de transition vitreuse dans la plage de -10 °C à 60 °C.

**8.** Polymère en émulsion selon la revendication 7, lequel polymère en émulsion a une température de transition vitreuse dans la plage de 0 °C à 40 °C.

**9.** Formulation de revêtement comprenant

a) un polymère en émulsion comprenant, en tant que motifs polymérisés :

i) 75 à 99,5 % en poids d'au moins un monomère non ionique, sur la base du poids dudit polymère en émulsion ;
ii) 0,5 à 5 % en poids d'au moins un monomère ionique, sur la base du poids dudit polymère en émulsion ;
iii) 0 à 10 % en poids d'au moins un monomère fonctionnel, sur la base du poids dudit polymère en émulsion ; et
iv) 0 à 10 % en poids d'au moins un monomère photoamorceur, sur la base du poids dudit polymère en émulsion ;

où la somme dudit monomère non ionique, dudit monomère ionique, dudit monomère fonctionnel et dudit monomère photoamorceur est égale à 100 % ; où ledit polymère en émulsion a une masse moléculaire moyenne en poids dans la plage de 30 000 à 300 000 ;

où ledit polymère en émulsion a une température de transition vitreuse dans la plage de -10 °C à 60 °C, et
b) 0,5 % en poids à 10 % en poids d'une molécule de type photoamorceur, sur la base du poids dudit polymère en émulsion.

**10.** Formulation de revêtement selon la revendication 9, dans laquelle ledit polymère en émulsion a une température de transition vitreuse dans la plage de 0 °C à 40 °C.

**11.** Article comprenant un substrat à base de ciment recouvert d'un revêtement brillant, comprenant

a) un substrat à base de ciment ; et
b) un revêtement formé à partir d'une formulation de revêtement comprenant un polymère en émulsion comprenant, en tant que motifs polymérisés:

i) 75 à 99,5 % en poids d'au moins un monomère non ionique, sur la base du poids dudit polymère en émulsion ;
ii) 0,5 à 5 % en poids d'au moins un monomère ionique, sur la base du poids dudit polymère en émulsion ;
iii) 0 à 10 % en poids d'au moins un monomère fonctionnel, sur la base du poids dudit polymère en émulsion ; et
iv) 0 à 10 % en poids d'au moins un monomère photoamorceur, sur la base du poids dudit polymère en émulsion ;

où la somme dudit monomère non ionique, dudit monomère ionique, dudit monomère fonctionnel et dudit monomère photoamorceur est égale à 100 % ; où ledit polymère en émulsion a une masse moléculaire moyenne en poids dans la plage de 30 000 à 300 000 ;

où ledit polymère en émulsion a une température de transition vitreuse dans la plage de -10 °C à 60 °C, et
où ladite formulation de revêtement est appliquée sur ledit substrat à base de ciment avant la cuisson ou le durcissement dudit substrat à base de ciment.

**12.** Article selon la revendication 11, dans lequel ledit polymère en émulsion comprend en outre de 0,5 à 10 % en poids de monomère photoamorceur, sur la base du poids dudit polymère en émulsion.

**13.** Article selon la revendication 11, dans lequel ladite formulation de revêtement comprend en outre de 0,5 à 10 % en poids de molécule de type photoamorceur, sur la base du poids dudit polymère en émulsion.

**14.** Article selon la revendication 12 ou la revendication 13, lequel article est exposé à un rayonnement actinique.

15. Article selon la revendication 14, dans lequel ladite formulation de revêtement comprend en outre un polymère à insaturation éthylénique.